# EUROPÄISCHE PATENTANMELDUNG

(11) **EP 1 602 430 A1**
(43) Veröffentlichungstag der Anmeldung: **07.12.2005**
(21) Anmeldenummer: 04013076.7
(22) Anmeldetag: 03.06.2004
(51) Int. Cl.: B23D 49/16, B23D 51/16

(54) **Handgeführte Bügelsäge**

(71) Anmelder: Westfalia Werkstoffcompany GmbH & Co. KG, 58093 Hagen (DE)
(72) Erfinder: Kang, Stanley, Taikooshing (HK); Klingbeil, Thomas, 46240 Bottrop (DE)
(74) Vertreter: DR. STARK & PARTNER

(57) **Zusammenfassung**

Die Erfindung betrifft eine handgeführte Bügelsäge (1), mit einem Handgrifft (5), einem Bügel (2) mit abgewinkelten Bügelenden (3) und einem zwischen den Bügelenden eingespannt angebrachten Sägeblatt (4), wobei zumindest die Bügelenden mit dem eingespannten Sägeblatt mittels eines in die Bügelsäge integrierten motorischen Antriebes in eine oszillierende translatorische Relativbewegung zum Handgriff versetzbar sind. Um eine handgeführte Bügelsäge anzugeben, die leicht und problemlos von verschieden Benutzern, unabhängig von deren spezifischer Kraft und handwerklicher Geschicklichkeit, verwendet werden kann, soll eine an der Bügelsäge angeordnete Klemmeinrichtung (13) als führender Anschlagbereich für das zu sägende Werkstück vorgesehen sein.

## Beschreibung

Die Erfindung betrifft eine handgeführte Bügelsäge, mit einem Handgriff, einem Bügel mit abgewinkelten Bügelenden und einem zwischen den Bügelenden eingespannt angebrachten Sägeblatt, wobei zumindest die Bügelenden mit dem eingespannten Sägeblatt mittels eines in die Bügelsäge integrierten motorischen Antriebes in eine oszillierende translatorische Relativbewegung zum Handgriff versetzbar sind.

Aus der Praxis sind derartige handgeführte Bügelsägen bekannt, die aufgrund der translatorische Bewegung des Sägeblattes relativ schwierig zu handhaben sind.

Aufgabe der Erfindung ist es, die vorgenannten Nachteile zu vermeiden und eine handgeführte Bügelsäge anzugeben, die leicht und problemlos von verschieden Benutzern, unabhängig von deren spezifischer Kraft und handwerklicher Geschicklichkeit, verwendet werden kann.

Diese Aufgabe wird gelöst durch eine handgeführte Bügelsäge, mit einem Handgriff, einem Bügel mit abgewinkelten Bügelenden und einem zwischen den Bügelenden eingespannt angebrachten Sägeblatt, wobei zumindest die Bügelenden mit dem eingespannten Sägeblatt mittels eines in die Bügelsäge integrierten motorischen Antriebes in eine oszillierende translatorische Relativbewegung zum Handgriff versetzbar sind, und wobei eine an der Bügelsäge angeordnete Klemmeinrichtung als führender Anschlagbereich für das zu sägende Werkstück vorgesehen ist.

Hierdurch ist die kraftintensive Auslenkung des Sägeblattes nicht vom Benutzer zu bewirken, sondern wird vom motorischen Antrieb erzeugt, und der Benutzer kann die Bügelsäge mit dem oszillierenden Sägeblatt handgeführt ohne große Anstrengung und eventuelle Ermüdungserscheinungen einsetzen, da Auslenkungen der Bügelsäge gegenüber dem Werkstück durch die Klemmeinrichtung verhindert werden.

Vorzugsweise kann der Bügel mit den Bügelenden im Wesentlichen starr und biegesteif ausgebildet und in seiner Gesamtheit in die Relativbewegung versetzbar sein, so dass bei einer einfachen technischen Konstruktion ein solider und belastbarer Aufbau mit geringer Störungsanfälligkeit gegeben ist.

Auch können die Bügelenden als jeweils um an entgegengesetzten Bereichen des Bügels angeordnete Lagerungen verschwenkbare Elemente ausgebildet sein und jeweils an einem Ende der Elemente das Sägeblatt gelagert angeordnet sowie am anderen Ende die Elemente gelagert mit einem Stabilisierungselement verbunden sein, so dass ähnlich einem parallelogrammähnlichen Scherenmechanismus einer Auslenkung des Sägeblattes eine entgegengesetzte Auslenkung des Stabilisierungselementes entgegensteht, die einen Schwingungsausgleich und somit einen ruhigen Lauf der Bügelsäge bewirkt.

Dabei kann die Position der Lagerungen an den Elementen veränderbar sein, so dass der Hub des Sägeblattes in einfacher Art und Weise einstellbar ist.

Vorteilhafterweise können die Bügelenden auch als Umlenkrollen mit einem zu mehr als der Hälfte umlaufenden, zwischen seinen Enden das eingespannte Sägeblatt beinhaltenden Spannmittel ausgebildet sein, wobei das Spannmittel als Kette, Zahnriemen oder dergleichen und die Umlenkrollen als Kettenritzel, geeignete Riemenscheibe oder dergleichen ausgebildet sein können.

Dabei kann das Sägeblatt erfindungsgemäß als entsprechend geeignet ausgebildeter Teilbereich des Spannmittels ausgebildet sein, so dass bei Verschleiß das gesamte Spannmittel einfach ausgetauscht wird und keine aufwändige Befestigung des Sägeblattes am Spannmittel oder dergleichen erforderlich ist.

Unabhängig von der Ausprägung des die Bügelenden sowie das Sägeblatt umfassenden ausgelenkten Teilbereichs der Bügelsäge kann der motorische Antrieb mittels eines Motors, insbesondere Netz- oder Akku-gespeisten Elektromotor erfolgen und über ein Exzentergetriebe sowie gegebenenfalls ein weiteres Getriebe, z. B. ein Planetenradgetriebe, als Untersetzung mit dem ausgelenkten Teilbereich der Bügelsäge verbunden sein.

Vorzugsweise kann die Klemmeinrichtung einen feststehenden Anschlag und ein in seinem Abstand zu dem Anschlag veränderlich festlegbares Klemmelement aufweisen, so dass der freie Bereich zwischen Anschlag und Klemmelement für die klemmende Aufnahme des zu sägenden Werkstücks auf die Geometrie des Werkstücks einstellbar ist.

Hierfür kann das Klemmelement an einer Längsführung translatorisch verschiebbar und mittels eines insbesondere als Klemmhebels oder dergleichen ausgebildeten Arretiereinrichtung feststellbar angeordnet sein, so dass eine leicht und einfach zu bewerkstelligende Verstellbarkeit bei gleichzeitig hoher Steifigkeit der Klemmeinrichtung gewährleistet ist.

Weiterhin kann der motorische Antrieb mit seiner Antriebsachse orthogonal zu der Schwenk- oder Drehachse eines die oszillierende translatorische Relativbewegung des Sägeblatts erzeugenden Übertragungsmittels angeordnet sein, so dass eine geringe Baugröße und insbesondere kleine Breite der handgeführten Bügelsäge resultiert.

Dabei kann ein Schneckengetriebe zur orthogonalen Antriebsumlenkung vorgesehen sein.

Vorteilhafterweise kann der Antr.ieb zumindest einen Riementrieb, insbesondere zwei beidseits des Bügels vorgesehene Riementriebe, aufweisen, so dass zum einen Toleranzen ausgeglichen werden und zum anderen eine Sicherung gegen Überlast gegeben ist. Auch ist bei zwei beidseits des Bügels vorgesehenen Riementrieben einen geringere Belastung des einzelnen Riementriebs gegeben und die Lagerungen innerhalb der Antriebskette werden nicht einseitig belastet, so dass Momente hinsichtlich des Bügelantriebs vermieden werden.

Im Folgenden werden ein in der Zeichnung dargestellte Ausführungsbeispiele der Erfindung erläutert.

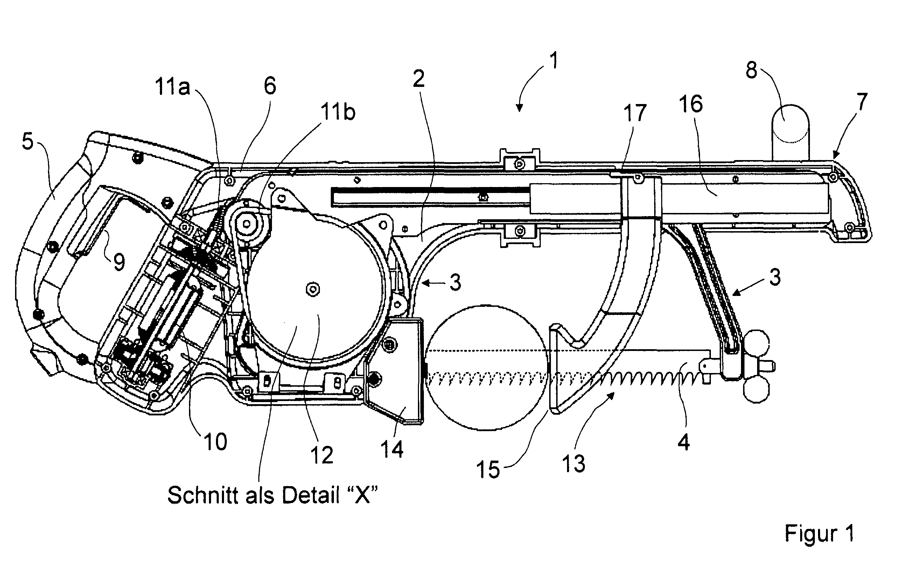

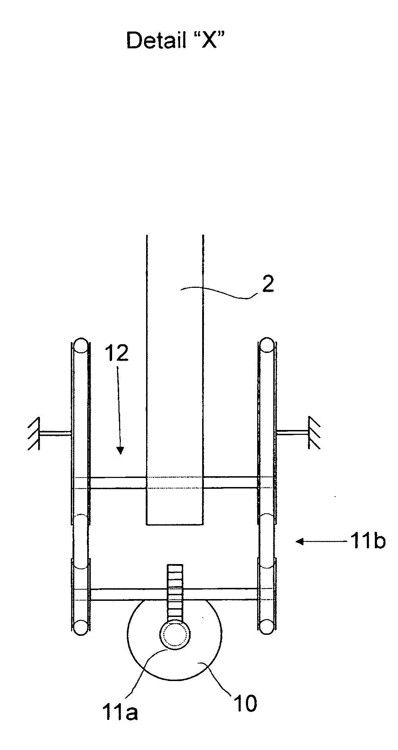

Figur 1 zeigt eine handgeführte Bügelsäge 1, die einen Bügel 2 mit Bügelenden 3 und zwischen den Bügelenden 3 eingespannten, in der Zeichnung zum Teil gestrichelt dargestelltem Sägeblatt 4 aufweist. Die Bügelsäge 1 weist am hinteren Ende einen Handgriff 5 auf und beinhaltet ferner ein Gehäuse 6, an dessen vorderen, in etwas bis zum vorderen Bügelende 3 reichenden Gehäuseende 7 ein weiterer Haltegriff 8 vorgesehen ist.

Im dargestellten Ausführungsbeispiel ist der gesamte Bügel 2 mit den Bügelenden 3 und dem Sägeblatt 4 im Wesentlichen starr ausgebildet und verschieblich im Gehäuse 6 gelagert.

Mittels eines am Handgriff 5 angeordneten Schalters 9 lässt sich ein im Gehäuse 6 angeordneter Motor 10 ein- bzw. ausschalten, der im aktivierten Zustand über ein Schneckengetriebe 11a und einen als Untersetzungsgetriebe fungierenden Riementrieb 11b sowie ein Exzentergetriebe 12 die Auslenkung des Bügels 2 bewirkt.

Der Motor 10 ist dabei als Elektromotor ausgebildet und die Bügelsäge 1 weist einen elektrischen Anschluss für das reguläre Stromnetz auf.

Die Bügelsäge beinhaltet eine Klemmeinrichtung 13, die einen feststehenden Anschlag 14 und ein in seinem Abstand zu dem Anschlag 14 veränderlich festlegbares Klemmelement 15 aufweist.

Das Klemmelement 15 ist an einer Längsführung 16 translatorisch verschiebbar und mittels eines insbesondere als Klemmhebel 17 oder dergleichen ausgebildeten Arretiereinrichtung feststellbar angeordnet.

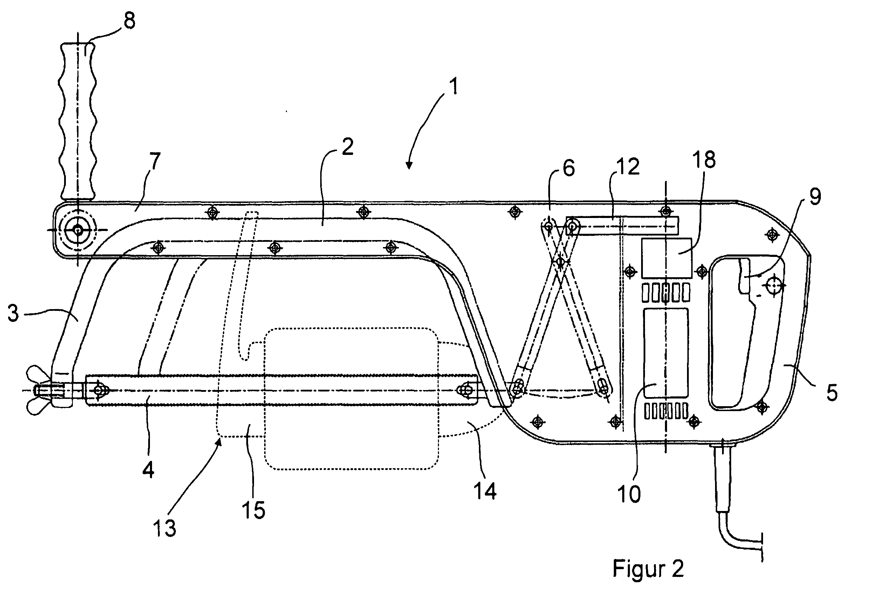

In Figur 2 ist ein alternatives Ausführungsbeispiel dargestellt, bei dem die Antriebsübertragung ein Untersetzungsgetriebe 18 und ein Exzentergetriebe 12 aufweist.

## Patentansprüche

1. Handgeführte Bügelsäge (1), mit einem Handgriff (5), einem Bügel (2) mit abgewinkelten Bügelenden (3) und einem zwischen den Bügelenden (3) eingespannt angebrachten Sägeblatt (4), wobei zumindest die Bügelenden (3) mit dem eingespannten Sägeblatt (4) mittels eines in die Bügelsäge (1) integrierten motorischen Antriebes in eine oszillierende translatorische Relativbewegung zum Handgriff (5) versetzbar sind, **dadurch gekennzeichnet, dass** eine an der Bügelsäge (1) angeordnete Klemmeinrichtung (13) als führender Anschlagbereich für das zu sägende Werkstück vorgesehen ist.

2. Handgeführte Bügelsäge (1) nach Anspruch 1, **dadurch gekennzeichnet, dass** der Bügel (2) mit den Bügelenden (3) im Wesentlichen starr und biegesteif ausgebildet und in seiner Gesamtheit in die Relativbewegung versetzbar ist.

3. Handgeführte Bügelsäge (1) nach Anspruch 1, **dadurch gekennzeichnet, dass** die Bügelenden (3) als jeweils um an entgegengesetzten Bereichen des Bügels (2) angeordnete Lagerungen verschwenkbare Elemente ausgebildet sind und jeweils an einem Ende der Elemente das Sägeblatt (4) gelagert angeordnet sowie am anderen Ende die Elemente gelagert mit einem Stabilisierungselement verbunden sind.

4. Handgeführte Bügelsäge (1) nach Anspruch 3, **dadurch gekennzeichnet, dass** die Position der Lagerungen an den Elementen veränderbar ist.

5. Handgeführte Bügelsäge (1) nach Anspruch 1, **dadurch gekennzeichnet, dass** die Bügelenden (3) als Umlenkrollen mit einem zu mehr als der Hälfte umlaufenden, zwischen seinen Enden das eingespannte Sägeblatt (4) beinhaltenden Spannmittel ausgebildet sind.

6. Handgeführte Bügelsäge (1) nach Anspruch 5, **dadurch gekennzeichnet, dass** das Spannmittel als Kette oder dergleichen und die Umlenkrollen als Kettenritzel oder dergleichen ausgebildet sind.

7. Handgeführte Bügelsäge (1) nach einem der Ansprüche 1 bis 6, **dadurch gekennzeichnet, dass** die Klemmeinrichtung (13) einen feststehenden Anschlag (14) und ein in seinem Abstand zu dem Anschlag (14) veränderlich festlegbares Klemmelement (15) aufweist.

8. Handgeführte Bügelsäge (1) nach Anspruch 7, **dadurch gekennzeichnet, dass** das Klemmelement (15) an einer Längsführung (16) translatorisch verschiebbar und mittels eines insbesondere als Klemmhebel (17) oder dergleichen ausgebildeten Arretiereinrichtung feststellbar angeordnet ist.

9. Handgeführte Bügelsäge (1) nach einem der Ansprüche 1 bis 8, **dadurch gekennzeichnet, dass** der motorische Antrieb mit seiner Antriebsachse orthogonal zu der Schwenk- oder Drehachse eines die oszillierende translatorische Relativbewegung des Sägeblatts (4) erzeugenden Übertragungsmittels angeordnet ist.

10. Handgeführte Bügelsäge (1) nach Anspruch 9, **dadurch gekennzeichnet, dass** ein Schneckengetriebe (11a) zur orthogonalen Antriebsumlenkung vorgesehen ist.

11. Handgeführte Bügelsäge (1) nach einem der Ansprüche 1 bis 10, **dadurch gekennzeichnet, dass** der Antrieb zumindest einen Riementrieb (11b), insbesondere zwei beidseits des Bügels (2) vorgesehene Riementriebe (11b), aufweist.

## Geänderte Patentansprüche

### Geänderte Patentansprüche gemäss Regel 86(2) EPÜ.

**1.** Handgeführte Bügelsäge (1), mit einem Handgriff (5), einem Bügel (2) mit abgewinkelten Bügelenden (3) und einem zwischen den Bügelenden (3) eingespannt angebrachten Sägeblatt (4), wobei zumindest die Bügelenden (3) mit dem eingespannten Sägeblatt (4) mittels eines in die Bügelsäge (1) integrierten motorischen Antriebes in eine oszillierende translatorische Relativbewegung zum Handgriff (5) versetzbar sind, wobei eine an der Bügelsäge (1) angeordnete Klemmeinrichtung (13) als führender Anschlagbereich für das zu sägende Werkstück vorgesehen ist, **dadurch gekennzeichnet, dass** der Antrieb zumindest einen Riementrieb (11b), insbesondere zwei beidseits des Bügels (2) vorgesehene Riementriebe (11b), aufweist.

**2.** Handgeführte Bügelsäge (1) nach Anspruch 1, **dadurch gekennzeichnet, dass** der Bügel (2) mit den Bügelenden (3) im Wesentlichen starr und biegesteif ausgebildet und in seiner Gesamtheit in die Relativbewegung versetzbar ist.

**3.** Handgeführte Bügelsäge (1) nach Anspruch 1, **dadurch gekennzeichnet, dass** die Bügelenden (3) als jeweils um an entgegengesetzten Bereichen des Bügels (2) angeordnete Lagerungen verschwenkbare Elemente ausgebildet sind und jeweils an einem Ende der Elemente das sägeblatt (4) gelagert angeordnet sowie am anderen Ende die Elemente gelagert mit einem Stabilisierungselement verbunden sind.

**4.** Handgeführte Bügelsäge (1) nach Anspruch 3, **dadurch gekennzeichnet, dass** die Position der Lagerungen an den Elementen veränderbar ist.

**5.** Handgeführte Bügelsäge (1) nach Anspruch 1, **dadurch gekennzeichnet, dass** die Bügelenden (3) als Umlenkrollen mit einem zu mehr als der Hälfte umlaufenden, zwischen seinen Enden das eingespannte Sägeblatt (4) beinhaltenden Spannmittel ausgebildet sind.

**6.** Handgeführte Bügelsäge (1) nach Anspruch 5, **dadurch gekennzeichnet, dass** das Spannmittel als Kette oder dergleichen und die Umlenkrollen als Kettenritzel oder dergleichen ausgebildet sind.

**7.** Handgeführte Bügelsäge (1) nach einem der Ansprüche 1 bis 6, **dadurch gekennzeichnet, dass** die Klemmeinrichtung (13) einen feststehenden Anschlag (14) und ein in seinem Abstand zu dem Anschlag (14) veränderlich festlegbares Klemmelement (15) aufweist.

**8.** Handgeführte Bügelsäge (1) nach Anspruch 7, **dadurch gekennzeichnet, dass** das Klemmelement (15) an einer Längsführung (16) translatorisch verschiebbar und mittels eines insbesondere als Klemmhebel (17) oder dergleichen ausgebildeten Arretiereinrichtung feststellbar angeordnet ist.

**9.** Handgeführte Bügelsäge (1) nach einem der Ansprüche 1 bis 8, **dadurch gekennzeichnet, dass** der motorische Antrieb mit seiner Antriebsachse orthogonal zu der Schwenk- oder Drehachse eines die oszillierende translatorische Relativbewegung des Sägeblatts (4) erzeugenden Übertragungsmittels angeordnet ist.

**10.** Handgeführte Bügelsäge (1) nach Anspruch 9, **dadurch gekennzeichnet, dass** ein Schneckengetriebe (11a) zur orthogonalen Antriebsumlenkung vorgesehen ist.
